# Europäisches Patentamt
## European Patent Office
### Office européen des brevets

(11) Publication number: **0 103 344**
**B1**

(12) **EUROPEAN PATENT SPECIFICATION**

(45) Date of publication of patent specification: **19.10.88**

(51) Int. Cl.⁴: **B 32 B 31/28,** B 05 D 3/06, B 32 B 21/06

(21) Application number: **83301260.2**

(22) Date of filing: **08.03.83**

(54) Process of in-line coating and decorative layer lamination with panel board material and the like employing electron-beam irradiation, and decorated panel produced thereby.

(30) Priority: **07.09.82 US 415534**

(43) Date of publication of application:
**21.03.84 Bulletin 84/12**

(45) Publication of the grant of the patent:
**19.10.88 Bulletin 88/42**

(84) Designated Contracting States:
**BE DE GB IT**

(56) References cited:
**US-A-3 658 620**

**ABSTRACT BULLETIN OF THE INSTITUTE OF PAPER CHEMISTRY, vol. 53, no. 3, September 1982, page 387, no. 3521, Appleton, Wisconsin, US; & JP - A - 82 2755 (M. SHIMA, DAI NIPPON PRINTING CO. LTD.) 08-01-1982**

(73) Proprietor: **Energy Sciences Inc.
8 Gill Street
Woburn Massachusetts (US)**

(72) Inventor: **Nablo, Sam
6, Brigham Road
Lexington Massachusetts (US)**
Inventor: **French, Donald
2600 Grassland Dr.
Louisville Kentucky (US)**

(74) Representative: **Allsop, John Rowland et al
Rowland Allsop & Co. Black Boy Yard 15 High Street
West Wycombe High Wycombe, Bucks. HP14 3AE (GB)**

# Description

The present invention relates to processes for laminating decorative layers, such as paper containing printed patterns, textures or the like, with panel boards and the like, being more particularly directed to providing laminated panel and decorative layer assemblies with ultimate hard, scratch and abrasion-resistant properties not originally possessed by such decorative layers while electron-beam bonding the laminate into a monolithic permanent structure.

Electron-beam radiation has been used for the curing of wood coatings and the like, as for producing enamel-coated fiberboard or chipboard for door, cabinet or other panel applications. More recently, as described, for example, by Helmers R. A., "Introducing New Electron Beam Cured Decorative Composite Panels", Furniture Manufacturing Management, 14, July 1979, printed finishing paper has been laminated with board substrate, with the laminating adhesive electron-beam cured. Such procedures have involved ultra-violet curing of adhesive on the board substrate before application of the printed finishing paper and, after lamination, the application of a top coat, followed by scanned electron-beam curing of the structure. This operation precludes "wetting" of the paper by the cured adhesive, so that the adhesive and top coat are, in effect, cured at separate times such that the structure is a laminate of connected layers with a visible top coat. Other procedures involve thermal-flash B-stage curing of the laminating adhesive (such as an emulsified polyvinyl acetate or the like) and subsequent activation by a heated roll during lamination, with the top coat electron-beam cured. Once again, however, the laminating adhesive is unresponsive to the electron cure, with the process precluding wetting of the finishing paper by the laminating adhesive or full adhesive cure at the time of top coat curing. The resulting structure is again a laminate of connected layers, with an apparent coating upon the paper.

Underlying the present invention is the discovery that a synergistic effect can be attained by a different process wherein the decorative layer (e.g. paper) is impregnated by the wet top coat (with appropriate dwell time) and is also further saturated by the wet laminating adhesive on the board substrate to which it is applied. The electrom beam cures both top coat and adhesive simultaneously, unexpectedly producing not just a laminate of mere connected and possibly peelable layers, but a novel bonding or grafting of the paper with the board in a virtually non-separable monolithic structure that permeates the decorative layer, renders it hard and scratch-resistant, and has little residual evidence of a well-defined top coat layer on the surface of the decorative layer — the decoration of this layer (though hardened) very desirably being the exposed surface.

An object of the present invention, accordingly, is to provide a new and improved electron beam process of coating and decorating paper or other layer lamination with panel boards and the like that employs this synergistic effect to provide novel decorated panels with improved properties over earlier panels as previously discussed.

A further object is to provide such a novel process and decorated panel that are particularly adapted for in-line processing techniques.

Other and further objects will be explained hereinafter and are more particularly delineated in the appended claims.

The invention relates to a process of laminating a decorative layer to a panel material comprising applying a wet electron-curable adhesive layer to said panel, applying a decorative layer upon said adhesive layer and thereafter applying a wet electron-curable low viscositty liquid lacquer as a top coating to the upper surface of said decorative layer. Such a process, known from the publication: ABSTRACT BULLETIN OF THE INSTITUTE OF PAPER CHEMISTRY, vol. 53, no. 3, September 1982, page 387, no. 3521, Appleton, Wisconsin, US; and JP—A—82/2755 (M. SHIMA, DAI NIPPON PRINTING CO. LTD.) 08-01-1982, is characterised according to the invention in that the adhesive layer has a viscosity sufficient to provide a substantially flat upper surface and the decorative layer is liquid permeable; sufficient dwell time of said lacquer upon said decorative layer is permitted, to enable said lacquer to permeate said decorative layer to contact said upper surface of said adhesive layer and fully impregnate said decorative layer with substantially no or minimal lacquer remaining on said upper surface of said decorative layer; and electron-beam irradiation is directed upon said decorative layer with sufficient energy and dose to polymerize simultaneously both the lacquer which has permeated said decorative layer and the adhesive layer, thereby to convert said decorative layer into a stiff polymer film bonded into a monolithic permanent structure with said panel.

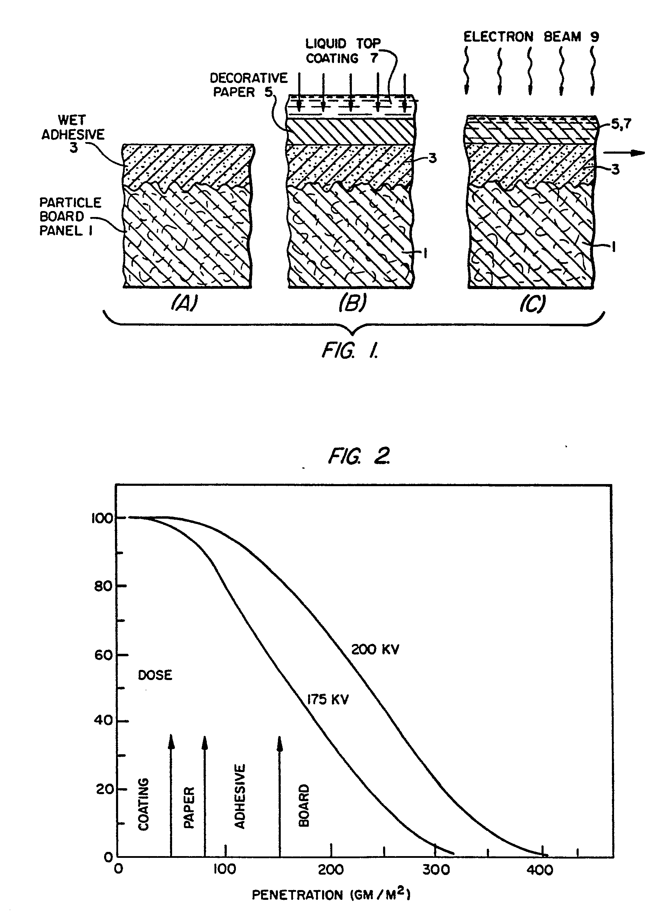

The invention will now be described in connection with the accompanying drawings, Figure 1 of which illustrates three steps A, B and C in the practice of the invention;

Figure 2 is a graph illustrating electron beam penetration into the various layers as a function of dose; and

Figure 3 is a photomicrograph of a top coated paper-decorated laminated particle board (200×) illustrating the monolithic structure bonding or grafting effect produced by the invention.

While various types of electron beam processors may be used in the process of the invention, including the before-mentioned scanning types, it is preferred to employ linear beam irradiation generators as of the type described in the prior United States Letters Patent Nos. 3,702,412, 3,745,396 and 3,769,600 of the assignee (Energy Sciences Inc.) of the present invention, including its CB 200/140/90 "Electrocurtain" processor. The use of such apparatus in electron-beam curing for adhering layers to textiles and other surfaces passed along production lines is described, for example, in United States Letters Patent No. 4,246,297.

In accordance with the present invention such or similar apparatus may be used in this new process for the continuous curing of large area panel products. For illustrative purposes, particularly since it involves the important area of building products and the like, the sheet-feeding of particle board or similar panel substrates to be laminated with printed paper or plastic decorative layers that in turn are to be top coated or otherwise provided with a protective exterior facing, will be specifically discussed. Reference will be made to the decorative layer as a paper layer.

Preparatory to such lamination and the electron-beam curing, in this example, the raw panel will usually first be sanded and cleaned. Then, as shown in Fig. 1(A), a wet electron-curable adhesive layer 3, of viscosity thin enough to flow into the panel fibres, as shown, but thick enough to provide a relatively stable flat and uniform outer surface, is applied to the surface (upper) of the panel 1 to be decorated, as by conventional means such as, for example, a reverse roll coater or the like (not shown) or as described in said Letters Patent No. 4,246,297. A printed or otherwise decorated or finished paper layer 5 or the like, Fig. 1(B), normally flexible and scratchable or markable and preferably somewhat porous or otherwise substantially liquid permeable, is shown applied to the adhesive layer 3 that coats the board 1. In practice, after lamination of the printed paper 5 (as from a conventional overhead unwind, not shown) to the adhesive coated board, the paper may be slit so that the panels are separated.

A liquid electron-curable top coating 7, such as a low viscosity liquid lacquer and the like, is then applied to the paper layer 5, typically with a curtain coater in a conveyor section offering high differential transport speed, schematically represented by the arrows, to insure, in accordance with the invention, sufficient dwell time before reaching the electron beam section 9 [Fig. 1(c)] that the top coating will permeate into and through the paper layer 5 down into contact with the adhesive layer 3, which also will permeate into the paper layer 5 from below. It is preferred that the top coating have time fully to impregnate the paper layer 5; the dwell time being adjusted to be sufficient for the top coating to be absorbed substantially totally within the paper layer 5, as laminated to the adhesive coating 3, such that there is no residual visible (or minimal) top coating remaining above the paper layer 5.

For certain applications, it may be desirable to retain a residual topcoat, for example, for functional purposes such as surface texturing or abrasion resistance, which can be readily accomplished by adjustment of the application thickness and viscosity, and of the coating dwell time to limit impregnation of the paper.

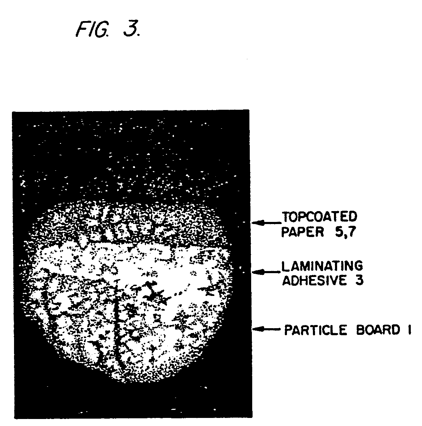

At such time, the laminate reaches the electron beam station 9 of Fig. 1 (C), conveyed along the line of the horizontal arrow, for simultaneous curing of the top coating and adhesive materials permeating the paper layer 5, and effecting the novel bonding or grafting to the particle board 1 in the previously described monolithic, unitary structure, while converting the paper layer 5 into a hardened, stiff polymer film which, unlike the original paper, is resistant to scratching, marking and impact. The synergistic merging of the coating and adhesive materials within the paper layer (and upper part of the board) into this unexpected monolithic structure is clearly shown in the photomicrograph of Fig. 3 (200×) demonstrating superb wetting and integration of the coated paper-particle board system (100 gm/m² construction).

A typical board construction, such as that of Fig. 3, involves about 50 g/m² of top coat 7 on about 30 g/m² of printed paper 5, with up to about 70 g/m² of adhesive 3. As a consequence, uniform curing through at least 150 g/m² of matter is required. (This can easily increase to 250 g/m² if printed vinyl is used in place of paper — in this case 100 μm thick vinyl (130 g/m²) may be typically employed). Suitable top coats 7 are of acrylic, epoxy or urethane; papers, rice paper or nitro cellulose-based paper; adhesives, of acrylic, epoxy or urethane. The dwell time for rice paper (30 g/m²) and a top coat of acrylic lacquer (50 g/m²) may be about ten seconds. Typical wood particle boards 1 are in the range of 0.3 to 3 cm. thick; top-coated layers of the order of 50—100 μm; and laminating adhesives of the order of 20—50 μm.

The penetrating capability of the electron processor 9 is important, particularly for the laminating application, as it is essential that the construction be cured uniformly and simultaneously to eliminate any possibility of film stress or creep due to inadequate cure. Fig. 2 shows the measured penetration performance of the above-described board construction at electron beam operating voltages of 175 and 200 kilovolts. The curves indicate that the half-points of the energy or treatment profile in the product are 170 and 250 g/m² respectively at these operating levels; i.e. .007 inch and .010 inch for material of unit density. Operation at voltages of up to 225 kV (300 electron-beam curing or .012 inch) will provide a reasonable margin of safety for "thick" lamination applications, and for line speeds of from about 75—200 feet per minute (up to say 60 meters/minute). The before-mentioned linear beam processor can provide a ±10% beam uniformity over a width of 1.35 meters (53 inches) at the plane of product curing, with a flat (half-width of 5 cm at the product plane), uniform, low dose rate treatment zone (about 2 to 4 megarads (1 rad = $1.0 \times 10^{-2}$ Gy) that enables insurance of completion of the polymerization of the coatings and adhesives. Efficient inerting of the process zone and effective ventilation of the curing station are readily attainable with this type of equipment.

Typical panel dimensions are 1.2 × 2.4 meters (4 feet × 8 feet) and the before-mentioned CB product-handling linear electron beam processor used in-line to convey the panel products continuously through the electron curing station 9 is 12.4 m × 1.56 m × 1.67 m (40 feet × 5 feet × 5.5 feet), designed, as before stated, for use at speeds up to 60 meters/minute (200 fpm).

The line process described herein produces a fully "radiation cured" laminate which is favorably comparable in other respects, also to the conventional (.75 mm thick) high pressure laminates of the prior art. Tests conducted on Pittsburgh Plate Glass Coatings R109W66 (a solid white pigmented coating typically used on filled board) and R81N66 (a clear topcoat for woodgrain printed paper laminated), showed Hoffman Scratch ratings of 1800 and 1100, respectively, compared with 400 for such high pressure laminates.

As previously stated, thin plastic layers may also be used as decorative layers, though such will vary in terms of the degree of top coating permeation that can be effected. Similarly other panel structures than board materials may be employed.

## Claims

1. A process of laminating a decorative layer to a panel material comprising applying a wet electron curable adhesive layer to said panel, applying a decorative layer upon said adhesive layer and thereafter applying a wet electron-curable low viscosity liquid lacquer as a top coating to the upper surface of said decorative layer, characterised in that the adhesive layer has a viscosity sufficient to provide a substantially flat upper surface and the decorative layer is liquid permeable; sufficient dwell time of said lacquer upon said decorative layer is permitted, to enable said lacquer to permeate said decorative layer to contact said upper surface of said adhesive layer and fully impregnate said decorative layer with substantially no or minimal lacquer remaining on said upper surface of said decorative layer; and electron-beam irradiation is directed upon said decorative layer with sufficient energy and dose to polymerize simultaneously both the lacquer which has permeated said decorative layer and the adhesive layer, thereby to convert said decorative layer into a stiff polymer film bonded into a monolithic permanent structure with said panel.

2. A process as claimed in claim 1 wherein said panel material is of fibrous and particulate material and said adhesive layer flows into the surface of said material.

3. A process as claimed in claim 1 wherein said electron-beam irradiation is adjusted to produce doses of substantially $2 \times 10^4$ to $4 \times 10^4$ Gy (2 to 4 megarads) from electron-beam voltages and adjusted in the range of substantially 175 to 250 KV, and with said decorative layer and panel assembly fed under electron-beam radiation at line speeds of from substantially $75 \times 0.3048$ to $200 \times 0.3048$ m/min.) (75 to 200 feet per minute).

4. A process as claimed in claim 2 wherein said fibrous panel is formed of wood fibres, and said decorative layer is liquid-permeable rice paper.

5. A process as claimed in claim 1 wherein the adhesive layer is thicker than said applied top coating and said decorative layer, and the thickness of said panel is greater than that of said layers.

6. A decorated panel made in accordance with the process as claimed in claim 1 characterised by having an impregnated paper decorative layer hardened as a polymerized scratch-resistant outer surface bonded into a monolithic permanent structure with an internal hardened polymerized adhesive layer secured to the upper surface of the panel material.

7. A decorated panel as claimed in claim 6 wherein the thickness of the hardened adhesive layer and that of the hardened decorative layer are small compared to the thickness of the panel.

8. A decorated panel as claimed in claim 7 wherein the hardened decorated paper layer, the hardened adhesive layer and the panel have thickness dimensions of the order of magnitude of substantially 50—100 μm, 20—50 μ and 3 cm respectively.

9. A decorated panel as claimed in claim 7 wherein the original top coat is of the order of substantially 50 g/m², the decorative paper substantially 30 g/m² and the adhesive layer substantially 70 g/m².

## Patentansprüche

1. Verfahren zum Laminieren eines Platten- oder Tafelmaterials mit einer Dekorschicht, bei welchem (Verfahren) eine feuchte, durch Elektronen aushärtbare Kleberschicht auf das Plattenmaterial, auf diese Kleberschicht dann die Dekorschicht und daran anschließend auf die Oberseite der Dekorschicht ein feuchter, durch Elektronen aushärtbarer flüssiger Lack niedriger Viskosität als Abschlußschicht aufgebracht werden, dadurch gekennzeichnet, daß die Kleberschicht eine ausreichende Viskosität aufweist, um für eine im wesentlichen ebene obere Überfläche zu sorgen, und die Dekorschicht flüssigkeitsdurchlässig ausgebildet ist, daß dem lack eine ausreichende Verweilzeit auf der Dekorschicht zugestanden wird, damit der Lack diese Dekorschicht für einen Kontakt mit der oberen Oberfläche der Kleberschicht durchdringen und die Dekorschicht vollständig durchtränken kann, wobei im wesentlichen kein Lack oder nur eine minimale Menge an Lack auf der erwähnten Oberseite der Dekorschicht verbleibt, daß die Dekorschicht einer Elektronenbestrahlung mit genügender Energie und Dosierung ausgesetzt wird, so daß eine Polymerisation gleichzeitig des Lackes, der die erwähnte Dekorschicht durchdrungen hat, und der Kleberschicht erreicht wird, wodurch die Dekorschicht in einen steifen Polymer-Film umgewandelt wird, der mit dem Plattenmaterial in eine monolitische, dauerhafte bzw. feste Struktur eingebunden ist.

2. Verfahren nach Anspruch 1, dadurch gekennzeichnet, daß das Plattenmaterial ein faser- und/oder partikelförmiges Material ist, und daß die Kleberschicht in die Oberflächhe dieses Materials fließt.

3. Verfahren nach Anspruch 1, dadurch gekennzeichnet, daß die Elektronenbestrahlung so eingestellt ist, daß sie eine Dosis von in etwa $2 \times 10^4$ bis $4 \times 10^4$ Gy (2—4 Megarad) bei im Bereich zwischen etwa 175—250 KV eingestellter Elektronenstrahl-Spannung liefert, und daß die aus der Dekorschicht sowie aus dem Plattenmaterial bestehende Anordnung unter der Elektronenbestrahlung mit einer Vorschubgeschwindigkeit von etwa $75 \times 0,3048$ bis $200 \times 0,3048$ m/min. (75 bis 200 Fuß pro Minute) vorbeibewegt wird.

4. Verfahren nach Anspruch 2, dadurch gekennzeichnet, daß das faserartige Plattenmaterial aus Holzfasern besteht, und daß die Dekorschicht flüssigkeitsdurchlässiges Reispapier ist.

5. Verfahren nach Anspruch 1, dadurch gekennzeichnet, daß die Kleberschicht dicker ist als die aufgebrachte Abschlußschicht und die erwähnte Dekorschicht, und daß die Dicke des Plattenmaterials größer als die Dicke der erwähnten Schichten ist.

6. Dekorplatte, hergestellt gemäß dem Verfahren nach Anspruch 1, dadurch gekennzeichnet, daß die Platte eine imprägnierte Dekorschicht aus Papier aufweist, die als polymerisierte, kratzfeste äußere oberfläche ausgehärtet und in eine monolithische, beständige Struktur eingebunden ist, und zwar mit einer internen ausgehärteten polymerisierten Kleberschicht, die auf der Oberseite des Plattenmaterials vorgesehen ist.

7. Dekorplatte nach Anspruch 6, dadurch gekennzeichnet, daß die Dicke der ausgehärteten Kleberschicht und der ausgehärteten Dekorschicht im Vergleich zur Dicke des Plattenmaterials klein sind.

8. Dekorplatte nach Anspruch 7, dadurch gekennzeichnet, daß die ausgehärtete, aus Papier bestehende Dekorschicht, die ausgehärtete Kleberschicht und das Plattenmaterial eine Dicke in der Größenordnung von etwa 50—100 um, 20—50 um bzw. 3 cm aufweisen.

9. Dekorplatte nach Anspruch 7, dadurch gekennzeichnet, daß die ursprüngliche Abschlußschicht in der Größenordnung von etwa 50 g/m², die Dekorschicht aus Papier etwa in der Großenordnung von 30 g/m² und die Kleberschicht in der Größenordnung von etwa 70 g/m² liegen.

**Revendications**

1. Un procédé de formation à couche multiple d'une couche décorative sur la matière d'un panneau comprenant l'application d'une couche adhésive durcissable électroniquement et, ensuite, l'application d'une laque liquide à basse viscosité, durcissable électroniquement à l'humidité comme revêtement de surface, sur la surface supérieure de ladite couche décorative, caractérisé en ce que la couche décorative a une viscosité suffisante pour fournir une surface supérieure sensiblement plate et en ce que la couche décorative est perméable aux liquides; en ce qu'un temps d'application suffisant de ladite laque sur la couche décorative est permis pour mettre ladite laque en mesure d'imprégner ladite couche décorative pour venir en contact avec ladite surface supérieure de ladite couche adhésive et imprégner entièrement ladite couche décorative avec une quantité de laque sensiblement nulle ou minime demeurant sur ladite surface supérieure de ladite couche décorative; et en ce que l'irradiation du faisceau électronique est dirigée sur ladite couche décorative avec une énergie et une dose suffisantes pour polymériser simultanément, à la fois, la laque qui a imprégné ladite couche décorative et la couche adhésive, convertissant de ce fait ladite couche décorative en un film polymère rigide lié audit panneau en une structure permanente monolithique.

2. Un procédé selon la revendication 1, dans lequel la matière dudit panneau est une matière fibreuse et particulière, et ladite couche adhésive s'écoule à la surface de ladite matière.

3. Un procédé selon la revendication 1, dans lequel ladite irradiation du faisceau électronique est réglée pour produire des doses sensiblement de $2 \times 10^4$ à $4 \times 10^4$ GY (de 2 à 4 mégarads) avec les tensions du faisceau électronique réglées dans la gamme de 175 à 250 kV sensiblement, et avec ladite couche décorative et l'ensemble du panneau alimentés sous irradiation d'électrons à des vitesses linéaires sensiblement de $75 \times 0,3048$ à $200 \times 0,3048$ m/mm (75 à 200 pieds par minutes).

4. Un procédé selon la revendication 2, dans lequel ledit panneau fibreux est formé de fibres de bois et ladite couche décorative est du papier de riz perméable aux liquides.

5. Un procédé selon la revendication 1, dans lequel la couche adhésive est plus épaisse que ledit revêtement de dessus appliqué et ladite couche décorative, et l'épaisseur dudit panneau est supérieure à celle desdites couches.

6. Un panneau décoré fait avec le procédé revendiqué dans la revendication 1, caractérisé en ce qu'il possède une couche décorative en papier imprégné, durcie en tant que surface extérieure polymérisée résistant aux éraflures, liée en une structure permanente monolithique avec un couche adhésive interne durcie par polymérisation et fixée à la surface de la matière du panneau.

7. Un panneau décoré selon la revendication 6, dans lequel l'épaisseur de la couche adhésive durcie et celle de la seconde couche décorative durcie sont petites comparées à l'épaisseurr du panneau.

8. Un panneau décoré selon la revendication 7, dans lequel la couche de papier décoré durcie, la couche adhésive durcie et le panneau ont des dimensions en épaisseur de l'ordre de grandeur de sensiblement 50 à 100 µm, 20 à 50 µm et 3 cm respectivement.

9. Un panneau décoré selon la revendication 7, dans lequel le revêtement du dessus d'origine est de l'ordre de sensiblement 50 g/m², le papier décoratif de sensiblement 30 g/m², et la couche adhésive de sensiblement 70 g/m².

FIG. 1.

FIG. 2.

FIG. 3.

← TOPCOATED PAPER 5,7

← LAMINATING ADHESIVE 3

← PARTICLE BOARD I